# EUROPÄISCHE PATENTSCHRIFT

(11) **EP 2 547 470 B1**
(45) Veröffentlichungstag und Bekanntmachung des Hinweises auf die Patenterteilung: **25.06.2014**
(21) Anmeldenummer: 10784980.4
(22) Anmeldetag: 18.11.2010
(51) Int. Cl.: B23D 25/06

(54) **ANORDNUNG ZUM ABLÄNGEN VON NAGELROHLINGEN VON EINEM INTERMITTIEREND ZUGEFÜHRTEN DRAHT**
DEVICE FOR CUTTING NAIL BLANKS FROM AN INTERMITTENTLY FED WIRE
DISPOSITIF DE COUPE D'ÉBAUCHES DE CLOUS À PARTIR D'UN FIL ALIMENTÉ DE MANIÈRE INTERMITTENTE

(30) Priorität: 17.03.2010 DE 102010011735
(43) Veröffentlichungstag der Anmeldung: 23.01.2013
(73) Patentinhaber: WAFIOS Aktiengesellschaft, 72764 Reutlingen (DE)
(72) Erfinder: GÖDTNER, Werner, 42897 Remscheid (DE); DÖDERLEIN, Frank, 72793 Pfullingen (DE)
(74) Vertreter: Geyer, Fehners & Partner
(86) Internationale Anmeldenummer: PCT/EP2010/007004
(87) Internationale Veröffentlichungsnummer: WO 2011/113455

(56) Entgegenhaltungen:
- DE-C1- 4 040 659
- US-A- 3 916 745
- US-A- 4 310 032
- US-A- 5 207 084

## Beschreibung

Die Erfindung bezieht sich auf eine Anordnung zum Ablängen von Nagelrohlingen von einem intermittierend zugeführten Draht unter gleichzeitiger Ausbildung einer Nagelspitze mittels einer Schneideinrichtung, die zwei einander bezüglich der Drahtlängsachse gegenüberliegende, zueinander gegenläufige Schneidwerkzeuge mit je einem von einem Träger gehaltenen Schneidmesser umfaßt, das zusammen mit dem Träger zwischen einer oberen vom Draht entfernten, eingezogenen Endstellung und einer unteren zum Draht hin ausgefahrenen Endstellung senkrecht zur Drahtlängsachse verschiebbar ist, wobei der Draht infolge einer Verdrängung von Drahtmaterial durch die Schneidmesser bei jedem Schnitt in Richtung vom freien Drahtende weg um einen Längsabschnitt verlängert wird.

Um an einem Draht eine Nagelspitze anzubringen, muß man mit zwei Messern diese Spitze formkneifen, was so an Nagelmaschinen seit jeher ausgeführt wird. Die Bewegung der Messer ist linear und gerade aufeinanderzu. Dabei wird schließlich der Draht geteilt und durch das Verdrängen des Materiales weicht der Draht in beide Drahtrichtungen aus.

Dieses Ausweichen des Drahtes in seine beiden Richtungen ist in Richtung seines freien Endes problemlos, in der Gegenrichtung, also in Richtung auf den Richtapparat bzw. Coil hin, führt dies aber zum Ausknicken des Drahtes, da hier der Draht nicht ausweichen kann. Üblicherweise löst man dies dadurch, daß ein in einer Nagelmaschine integrierter Festhalter so gesteuert wird, daß dabei die Längenänderung kompensiert wird. Diesen Festhalter axial verschiebbar aufzubauen, ist jedoch sehr aufwendig und unter den Betriebsbedingungen sehr anfällig.

Aus der US 5 207 084 A auf welcher der Oberbegriff des Anspruchs 1 basiert, sind ein Verfahren und ein Messer zum Anformen spezieller Drahtenden (wie Spitzen, Keile) bekannt. Allerdings findet auch dort beim Schnitt eine Materialverdrängung in beide Drahtrichtungen statt.

Die WO 03/101643 A1 beschreib ein rotierendes und kontinuierlich arbeitendes Schnittsystem mit Klemmelementen, die am Umfang umlaufender Schneidräder in deren Drehrichtung vor und/oder hinter den dort ebenfalls befestigten Messer angebracht sind. Bei dieser Art von Schnitt zeigt sich allerdings, daß die Genauigkeit der Länge des jeweils abgeschnittenen Stiftes deutlich stärker als bei intermittierend arbeitenden Maschinen variiert.

Aus der EP 1 293 274 B1 ist eine Vorrichtung zum Ablängen von Draht bekannt, die mit einem Stechmeißel zum Durchtrennen des Drahtes arbeitet. Der Stechmeißel ist radial gegen den Draht verfahrbar und um eine Schwenkachse entgegen einer Federkraft auslenkbar. Dabei findet aber weder eine Spitzenerzeugung statt, noch liegt eine einigermaßen definierte Bewegungsbahn vor.

Ein rotierendes, kontinuierlich arbeitendes Schneidsystem ist in der EP 0 924 007 B1 beschrieben, bei dem durch ein Überlagerungsgetriebe die Geschwindigkeit der Messer mit einer zur Zuführgeschwindigkeit des Drahtes synchronen Umfangsgeschwindigkeit angetrieben werden. Hierbei findet bei einem Schnittvorgang allerdings keine Spitzenherstellung statt und im übrigen ist die Genauigkeit der Länge des abgeschnittenen Stiftes wieder deutlich stärker variierend als bei intermittierend arbeitenden Maschinen.

Ein ähnlich arbeitendes rotierendes, kontinuierlich arbeitendes Schnittsystem zeigt die US 4 310 032 A, bei dem einem Drahteinzug eine zwei um 180° zueinander versetzte Messer tragende Walze nachgeschaltet ist, wobei beim Schnitt jedoch keine Spitzenerzeugung stattfindet. Bei diesem bekannten Schnittsystem tritt eine Materialverdrängung in beide Drahtrichtungen auf und die Genauigkeit der Länge der abgeschnittenen Stifte variiert stärker als bei intermittierend angetriebenen Maschinen.

Die DE 24 22 815 C3 beschreibt einen Kurbeltrieb zum radialen und axialen Antreiben zweier einander gegenüberliegender Messer, wobei auch hier der Schnitt bei einem kontinuierlich laufenden Werkstück erfolgt. Diese bekannte Schneidanordnung beinhaltet insgesamt einen sehr hohen mechanischen Aufwand, wobei die gesamte Einrichtung sehr groß baut.

Aus der US 5 181 886 A ist eine Anordnung der einleitend genannten Art bekannt, bei welcher der Kopf des Nagels angestaucht, sodann der Draht transportiert und anschließend beim Abtrennen die Spitze hergestellt wird. Bei dieser Maschine tritt die bekannte Materialverdrängung in beide Richtungen beim Schnitt auf, wobei der nächste Nagelkopf vorgeformt wird. Die Bewegung der Messer ist rein radial. Ähnliche Nagelmaschinen sind auch in der JP 09151918 A und in der EP 0 554 665 A beschrieben.

Ausgehend hiervon liegt der Erfindung die Aufgabe zugrunde, eine Schneidanordnung der vorstehend genannten Art derart auszubilden, daß bei intermittierender Werkstoffzufuhr eine Kompensation der Drahtlänge in Richtung des festen Endes des abzutrennenden Werkstücks sichergestellt wird.

Erfindungsgemäß wird dies dadurch erreicht, daß jedes Schneidmesser während des Schnittvorganges bei seiner radialen Verschiebebewegung auch noch in Längsrichtung des Drahtes zu dessen freiem Ende hin relativ zum Draht um eine vorgegebne Strecke bewegt wird, die größer als der Längsabschnitt ist.

Durch die erfindungsgemäßen Maßnahmen wird erreicht, daß während des Schneidvorganges, bei dem das Drahtmaterial in beide Längsrichtungen des Drahtes verdrängt wird, infolge der überlagerten Bewegung in Drahtlängsrichtung die auftretende Längung des Drahtes durch das verdrängte Drahtmaterial in Richtung Einzug kompensiert und damit verhindert wird, daß die beim Stand der Technik bestehende Gefahr des Auftretens einer Knickung, Verbiegung oder unerwünschter Längentoleranzen in Richtung auf den Richtapparat bzw. zum Coil hin auftritt. Dabei sind die erfindungsgemäßen Maßnahmen ohne großen Aufwand realisierbar und deutlich weniger kompliziert als wenn man bei einer intermittierend arbeitenden Maschine z. B. für die Verschiebung von Einzugszangen aufwendige Mechanismen zur Kompensation der Längung einsetzten wollte.

Eine besonders bevorzugte Ausgestaltung der Erfindung besteht darin, daß jedes Schneidmesser am Ende eines Pleuels angebracht ist, der seinerseits über einen exzentrisch an einer Kurbelwelle vorgesehenen Kurbelzapfen angetrieben wird. Bei dieser Ausgestaltung verläuft die Schnittbewegung der Messer auf einer ellipsenförmigen Bahn, bei deren Durchlauf die Messer bei der Schnittbewegung auch eine Schwenkbewegung ausführen. Dabei ist die Bahn so ausgelegt, daß die horizontale Komponente der Ellipse vom Auftreffpunkt auf den Draht bis zur vollständigen Herstellung der Spitze (Trennung) die geforderte größere Länge als die Längung des Materials infolge Verdrängung in Richtung auf die feste Einzugszange hin aufweist. Gleichzeitig führen bei dieser Ausgestaltung die Messer auch noch eine Abrollbewegung aus, was infolge eines hochwertigen Schnittes zu einer besonders guten Qualität der Spitze führt und dabei nur eine sehr geringe Rißzone auftritt. Die bei der Herstellung solcher Nagelrohlinge unvermeidbaren Längentoleranzen des erzeugten Stiftes ergeben sich bei der Erfindung jedoch in Form nur besonders kleiner Längenabweichungen.

Eine weiter bevorzugte Ausführungsform der Erfindung besteht bei der Verwendung eines Pleuels darin, daß jeder Pleuel in einem Führungskörper verschieblich geführt ist, der seinerseits um eine zur Mittelachse der Kurbelwelle parallel angeordnete Schwenkachse verschwenkbar ist. Hierbei wird die elliptische Bahnkurve durch eine Kurbelwelle und eine schwenkbare Linearführung (in Form des Führungskörpers) realisiert, was einen vergleichsweisen geringen Aufwand darstellt und praktisch zu besonders guten Nagelspitzen, ohne Spaltspitze führt.

Eine andere vorzugsweise Ausbildung der Erfindung bei der Verwendung eines Pleuels besteht auch darin, daß jeder Pleuel um eine Schwenkachse verschwenkbar an einem Führungshebel befestigt ist, der seinerseits um eine zur Mittelachse der Kurbelachse parallele Achse verschwenkbar ist. Bei dieser Ausgestaltung der Erfindung wird der Einsatz einer Linearführung beim Pleuel vermieden.

Eine weitere vorteilhafte Ausgestaltung der Erfindung besteht auch darin, daß die vorgegebene Strecke, längs derer sich jedes Schneidmesser beim Schnittvorgang relativ zum Draht in dessen Längsrichtung bewegt, einstellbar ist. Damit kann beim Schnitt unterschiedlich dicken Nagelrohlingen Rechnung getragen werden, wodurch die erfindungsgemäße Anordnung sehr flexibel einsetzbar ist.

Besonders bevorzugt kann dies bei der erfindungsgemäßen Anordnung in der Ausgestaltung mit einem Pleuel und einem verschwenkbaren Führungskörper oder mit einem verschwenkbaren Führungshebel dadurch vorgenommen werden, daß der Abstand jeder Schwenkachse bzw. der Achse, um die der Führungshebel schwenkt, von der Längsachse des Drahtes verstellbar ist. Bei diesem Aufbau der Schnitteinheit kann die Ellipsenform der Bewegungsbahn der Messer nach Form, wie auch nach Größe eingestellt werden.

Die Erfindung wird nachfolgend anhand der Zeichnung im Prinzip beispielshalber noch näher erläutert. Es zeigen:
- Fig. 1: eine prinzipielle Darstellung einer Ansicht einer erfindungsgemäßen Anordnung;
- Fig. 2: eine prinzipielle Darstellung des Schnittablaufes im Rahmen unterschiedlicher, nacheinander liegender Bewegungsstadien der Schneidmesser;
- Fig. 3: eine prinzipielle Darstellung einer Ansicht entsprechend Fig. 1, wobei der Pleuel an einem Führungshebel angelenkt ist, bei auseinandergefahrenen Messern;
- Fig. 4: die Ansicht aus Fig. 3, aber mit voll zusammengefahrenen Messern;
- Fig. 5: eine prinzipielle Darstellung der elliptischen Bahnkurve eines Schneidmessers, sowie
- Fig. 6: eine prinzipielle Darstellung der Abrollbewegung der Schneidmesser bei einer erfindungsgemäßen Anordnung.

In der nachfolgenden Figurenbeschreibung sind auch bei unterschiedlichen Ausführungsformen einander entsprechende Teile stets mit gleichen Bezugszeichen bezeichnet.

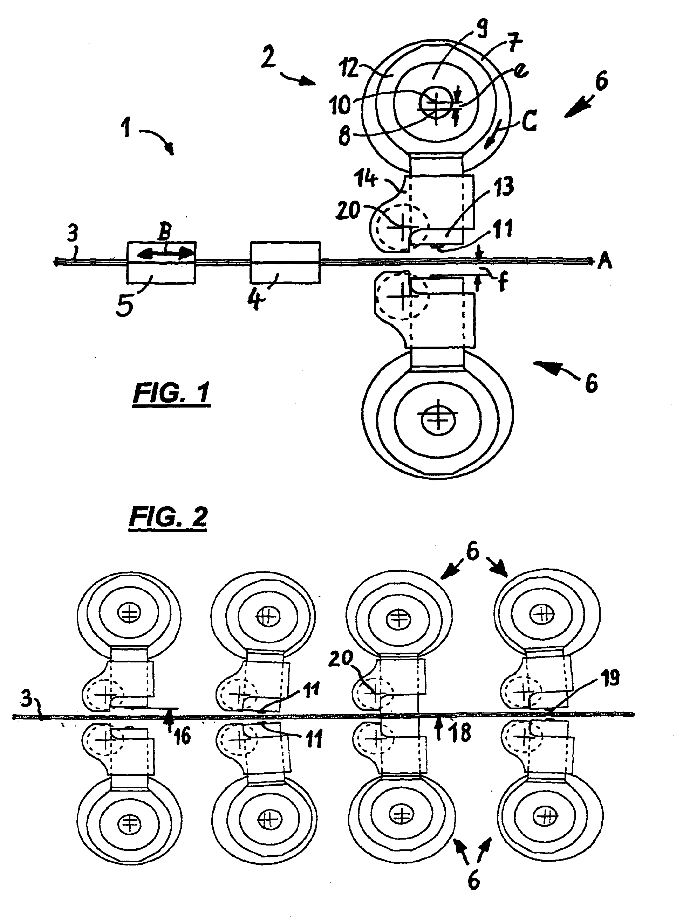

Die in Fig. 1 gezeigte Anordnung zum Ablängen von Nagelrohlingen umfaßt eine Einzugseinheit 1 sowie eine Schnitteinheit 2 zum Abtrennen und gleichzeitigem Umformen sowie Anspitzen des Werkstücks 3 (in Draufsicht).

In der Darstellung der Fig. 1 ist die Einzugseinheit 1 nur schematisch als ein Zangeneinzug dargestellt, der eine feste Einzugszange 4 und eine bewegliche Einzugszange 5 aufweist, die mit Greifbacken oder sonstigen Mitteln (nicht dargestellt) zum Festhalten des Werkstücks 3 (Draht) ausgerüstet sind.

Bei Betrieb ergreift die bewegliche Einzugszange 4 den Draht 3 in einer linken Endlage und schiebt diesen bei der Bewegung in Richtung ***B*** der Einzugszange 5 parallel zu der Drahtlängsachse ***A*** nach rechts. In der rechten Endlage ergreift die feste Einzugszange 4 den Draht 3, wonach die bewegliche Einzugszange 5 geöffnet und ihre linke Ausgangsstellung zurückbewegt werden kann.

Es versteht sich von selbst, daß anstelle dieses sogenannten Zangeneinzugs auch beliebige andere intermittierend betätigbare Einzugssysteme, z. B. ein Walzeneinzug, zum Einsatz kommen können. Die Anlage arbeitet intermittierend, wobei der Draht 3 getrennt wird, wenn er keine Axialbewegung (Vorschubbewegung) macht.

Die Schnitteinheit 2 umfaßt zwei identisch aufgebaute, spiegelbildlich zur Drahtlängsachse A angeordnete Schnittmodule 6.

Jeder Schnittmodul 6 weist eine Kurbelwelle 7 auf, die bei einem in Fig. 1 nicht dargestellten Antrieb in Pfeilrichtung ***C*** um eine Drehachse 8 gedreht wird (die Kurbelwelle des zweiten Moduls dreht sich entsprechend gegensinnig).

Der Kurbelzapfen 9 hat eine Mittelachse 10, die um eine bestimmte Exzentrizität ***e*** zur Drehachse 8 der Kurbelwelle 7 versetzt ist. Dieser Abstand ***e*** entspricht dem halben Abstand ***f*** zwischen Messer 8 und der Drahtlängsachse ***A***.

Auf dem Kurbelzapfen 9 sitzt verdrehbar ein Pleuel 12, dessen freies Ende 13 in einem Führungskörper 14, und zwar linear in diesem verschiebbar, gelagert ist. Der Führungskörper 14 ist um eine Schwenkachse 20 frei verschwenkbar. An der unteren Stirnseite des Pleuelendes 13 ist ein Messer 11 zum Trennen und Anformen der Nagelspitze eingesetzt.

Durch die Zwangsführung des Pleuels 12 durchlauft das am freien Ende 13 desselben befestigten Messer 11 bei einer Drehung der Kurbelwelle 7 (um 360°) eine elliptische Bahnkurve. Gleichzeitig wird dabei auch eine Abrollbewegung des Messers 11 gegenüber dem Draht 3 beim Schnitt erreicht.

Zur Darstellung eines Schnittvorgangs zeigt Fig. 2 vier verschiedene Einstellungen der Schnittmodule 6, wobei die Kurbelwellen 7 jeweils um 90° (im Uhrzeigersinn) weitergedreht sind.

In der Darstellung ganz links in Fig. 2 befinden sich die Messer 11 in ihrem vom Draht 3 abgewandten Totpunkt 16. Die zweite Darstellung von Fig. 2 zeigt die Messer 11 auf ihrem Weg zum unteren Totpunkt 18, den sie schließlich in der dritten Stellung erreicht haben. Damit ist der Draht 3 getrennt und die Spitze 19 des Werkstücks hergestellt, ehe sich die Messer wieder zu ihrem oberen Totpunkt 16 bewegen.

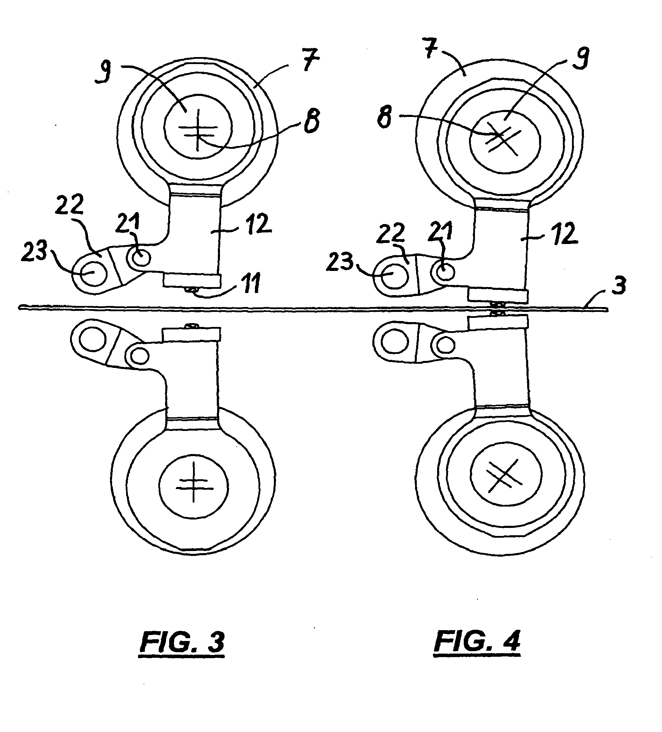

In Fig. 3 ist eine prinzipielle Anordnung entsprechend Fig. 1 gezeigt, wobei hier im Unterschied dazu jeder Pleuel 12 jedoch nicht mehr in einem Führungskörper 14 verschieblich, sondern an einem um eine zur Mittelachse 8 der Kurbelwelle 7 parallele Achse 23 verschwenkbar angebrachten Führungshebel 22 über eine Schwenkachse 21 angelenkt ist, die ihrerseits ebenfalls zur Mittelachse 8 der Kurbelwelle 7 parallel liegt. Dabei ist bei der dargestellten Ausführungsform die Schwenkachse 21 an dem dem Pleuel 12 zugewandten Ende des Führungshebels 22 angebracht und die Achse 23 an dessen entgegengesetztem Ende angeordnet. Während bei der Darstellung der Fig. 3 die Messer 11 in ihrem voll auseinandergefahrenem Zustand gezeigt sind, sind sie in Fig. 4 in einem zusammengefahrenen Zustand dargestellt.

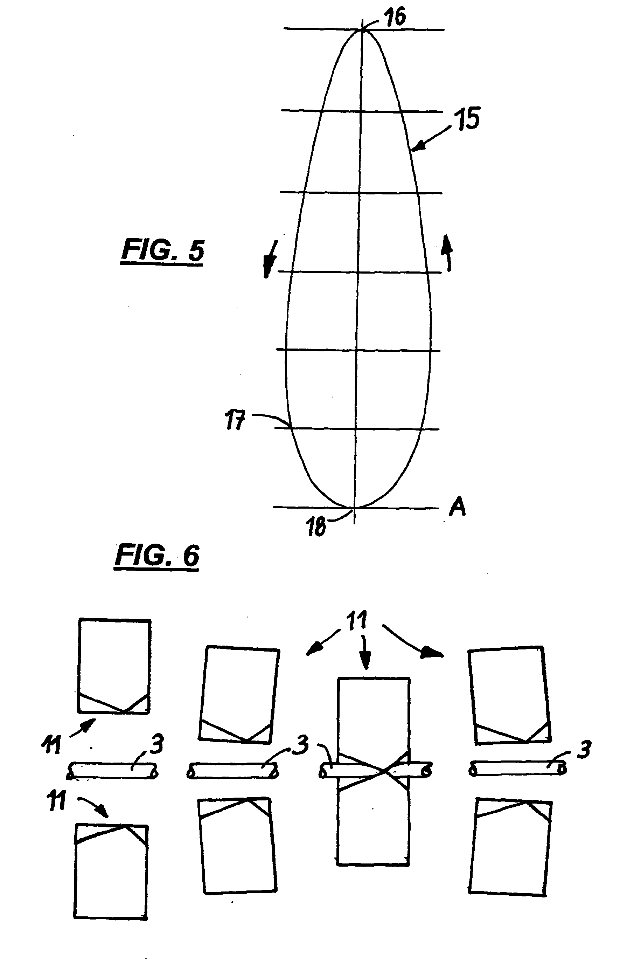

Fig. 5 zeigt eine typische elliptische Bewegungsbahn 15 eines Messers 11, wobei die Tangente am in der Figur 3 unteren Ende der Ellipse der Drahtmittelachse ***A*** entspricht.

Das Messer wird von dem oberen Totpunkt 16 nach unten längs der Ellipse 15 bewegt, bis es am Punkt 17 auf den Außenumfang des Drahtes 3 auftrifft. Bei der weiteren Bewegung dringt das Messer 11 tiefer in den Draht 3, bis es zum unteren Totpunkt 18 gelangt, der in der Drahtmittelachse ***A*** liegt, wo das Messer bei gleichzeitiger Herstellung einer Spitze 19 den Draht 3 abtrennt. Bei der weiteren, folgenden Bewegung wird das Messer 11 wieder in seine obere Totpunktlage 16 befördert.

Zwischen den Punkten 17 und 18 wird das Drahtmaterial von der speziellen Schneidegeometrie der Messer 11 verdrängt.

In Fig. 6 sind schließlich, in einer nur ganz prinzipiellen Darstellung, für die vier bereits in Fig. 2 gezeigten Positionen der beiden Schnittmodule 6 die entsprechenden Stellungen der Messer 11 angegeben, um die Schwenkbewegung darzustellen, die jedes Messer 11 relativ zum Draht 3 bei Durchgang durch die unterschiedlichen Stadien ausführt.

Wie aus Fig. 6 erkennbar ist, bewegt sich jedes Messer 11 in einer Art abrollender Bewegung gegenüber dem Draht 3, wodurch eine besonders gute Schnittqualität an der Spitze 19 erreicht wird.

Die Schnittmodule 6 können so ausgelegt werden, daß die Form der ellipsenförmigen Bewegungsbahn 15 veränderbar ist, z. B. die Ellipse dicker oder schlanker ausgebildet werden kann, z. B. durch Veränderung des Abstandes jeder Schwenkachse 20 von der Drahtlängsachse A.

## Patentansprüche

1. Anordnung zum Ablängen von Nagelrohlingen von einem intermittierend zugeführten Draht (3) unter gleichzeitiger Ausbildung einer Nagelspitze (19) mittels einer Schneideinrichtung (2), die zwei einander bezüglich der Drahtlängsachse (A) gegenüberliegende, zueinander gegenläufige Schneidwerkzeuge (6) mit je einem von einem Träger gehaltenen Schneidmesser (11) umfaßt, das zusammen mit dem Träger zwischen einer oberen, vom Draht (3) entfernten, eingezogenen Endstellung (16) und einer unteren, zum Draht (3) hin ausgefahrenen Endstellung (18) senkrecht zur Drahtlängsachse (A) verschiebbar ist, wobei der Draht (3) infolge einer Verdrängung von Drahtmaterial durch die Schneidmesser (11) bei jedem Schnitt in Richtung vom freien Drahtende weg um einen Längsabschnitt verlängert wird, ***gekennzeichnet,* durch** Mittel, um jedes Schneidmesser (11) während des Schnittvorganges bei seiner radialen Verschiebebewegung auch noch in Längsrichtung (A) des Drahtes (3) zu dessen freiem Ende hin relativ zum Draht (3) um eine vorgegebene Strecke zu bewegen, die größer als der Längsabschnitt ist.

2. Anordnung nach Anspruch 1, **dadurch gekennzeichnet, daß** jedes Schneidmesser (11) am Ende (13) eines Pleuels (12) angebracht ist, der seinerseits über einen exzentrisch (e) an einer Kurbelwelle (7) vorgesehenen Kurbelzapfen (9) angetrieben wird.

3. Anordnung nach Anspruch 2, **dadurch gekennzeichnet, daß** jeder Pleuel (12) in einem Führungskörper (14) verschieblich geführt ist, der seinerseits um eine zur Mittelachse (8) der Kurbelwelle (17) parallel angeordnete Schwenkachse (20) verschwenkbar ist.

4. Anordnung nach einem der Ansprüche 1 bis 3, **dadurch gekennzeichnet, daß** die vorgegebene Strecke, längs derer sich jedes Schneidmesser (11) beim Schnittvorgang relativ zum Draht (3) in dessen Längsrichtung (D) bewegt, einstellbar ist.

5. Anordnung nach Anspruch 2, **dadurch gekennzeichnet, daß** jeder Pleuel (12) um eine Schwenkachse (21) verschwenkbar an einem Führungshebel (22) befestigt ist, der seinerseits um eine zur Mittelachse (8) der Kurbelwelle (7) parallele Achse (23) verschwenkbar ist.

6. Anordnung nach einem der Ansprüche 3 oder 5, **dadurch gekennzeichnet, daß** der Abstand jeder Schwenkachse (20) bzw. Achse (23) von der Drahtlängsachse (A) verstellbar ist.

## Claims

1. Arrangement for cutting nail blanks from an intermittently fed wire (3) with simultaneous formation of a nail tip (19) by means of a cutting device (2) which comprises two cutting tools (6) which lie opposing one another in relation to the longitudinal axis (A) of the wire, which work in opposing directions to one another and each have a cutting knife (11) which is held by a support and, together with the support, can be displaced perpendicularly to the longitudinal axis (A) of the wire between an upper withdrawn end position (16) remote from the wire (3) and a lower end position (18) extended toward the wire (3), wherein, as a result of a displacement of wire material by the cutting knife (11) during each cut, the wire (3) is elongated by a longitudinal section in the direction away from the free wire end, **characterised by** means for moving each cutting knife (11) during the cutting process, during the radial displacement movement thereof, relative to the wire (3) in the longitudinal direction (A) of the wire (3) toward the free end thereof by a pre-determined distance which is greater than the longitudinal section.

2. Arrangement according to claim 1, **characterised in that** each cutting knife (11) is attached to the end (13) of a connecting bar (12) which is driven via a crankpin (9) provided eccentrically (e) on a crankshaft (7).

3. Arrangement according to claim 2, **characterised in that** each connecting bar (12) is displaceably guided in a guide member (14) which is pivotable about a pivot axis (20) arranged parallel to the central axis (8) of the crankshaft (17).

4. Arrangement according to one of the claims 1 to 3, **characterised in that** the pre-defined distance along which each cutting knife (11) moves during the cutting process relative to the wire (3) in the longitudinal direction (D) thereof is adjustable.

5. Arrangement according to claim 2, **characterised in that** each connecting bar (12) is connected to a guide lever (22) pivotable about a pivot axis (21), said guide lever being pivotable about an axis (23) arranged parallel to the central axis (8) of the crankshaft (7).

6. Arrangement according to one of the claims 3 or 5, **characterised in that** the separation of each pivot axis (20) or axis (23) from the longitudinal axis (A) of the wire is adjustable.

## Revendications

1. Dispositif de coupe d'ébauches de clous à partir d'un fil (3) alimenté de manière intermittente et de formation simultanée d'une pointe de clou (19) au moyen d'un dispositif de découpe (2) qui comprend deux outils de découpe (6) opposés l'un par rapport à l'autre, agencés en opposition l'un à l'autre par rapport à l'axe longitudinal du fil (A), avec chacun une lame de découpe (11) maintenue sur un support qui peut coulisser perpendiculairement à l'axe longitudinal du fil (A), conjointement avec le support, entre une position d'extrémité supérieure rétractée (16), à distance du fil (3), et une position d'extrémité inférieure déployée (18) en direction du fil (3), étant entendu que le fil (3) est allongé d'une section longitudinale dans la direction opposée à l'extrémité libre du fil à chaque découpe en raison d'un refoulement du matériau du fil par les lames de découpe (11), **caractérisé par** des moyens destinés à déplacer également chaque lame de découpe (11) pendant le processus de découpe, lors de son déplacement par coulissement radial, dans la direction longitudinale (A) du fil (3) en direction de son extrémité libre par rapport au fil (3) sur une distance prédéfinie qui est plus grande que la section longitudinale.

2. Dispositif selon la revendication 1, **caractérisé en ce que** chaque lame de découpe (11) est agencée à l'extrémité (13) d'une bielle (12), qui est pour sa part entraînée par le biais d'un maneton (9) prévu en position excentrique (e) sur un vilebrequin (7).

3. Dispositif selon la revendication 2, **caractérisé en ce que** chaque bielle (12) est guidée de façon coulissante dans un corps de guidage (14), qui peut pour sa part pivoter autour d'un axe de pivotement (20) agencé parallèlement à l'axe médian (8) du vilebrequin (17).

4. Dispositif selon l'une des revendications 1 à 3, **caractérisé en ce que** la distance prédéfinie le long de laquelle chaque lame de découpe (11) se déplace par rapport au fil (3), dans sa direction longitudinale (D), lors du processus de coupe peut être modifiée.

5. Dispositif selon la revendication 2, **caractérisé en ce que** chaque bielle (12) est fixée de façon pivotante autour d'un axe de pivotement (21) sur un levier de guidage (22), qui peut pour sa part pivoter autour d'un axe (23) parallèle à l'axe médian (8) du vilebrequin (7).

6. Agencement selon l'une des revendications 3 ou 5, **caractérisé en ce que** l'écart de chaque axe de pivotement (20) ou axe (23) avec l'axe longitudinal du fil (A) peut être réglé.
